# EUROPÄISCHE PATENTANMELDUNG

(11) **EP 0 730 816 A1**
(43) Veröffentlichungstag der Anmeldung: **11.09.1996**
(21) Anmeldenummer: 96103029.3
(22) Anmeldetag: 29.02.1996
(51) Int. Cl.: A01B 35/22

(54) **Zinkenaufbau für ein landwirtschaftliches Gerät**

(30) Priorität: 10.03.1995 US 402271
(71) Anmelder: DEERE & COMPANY, Moline Illinois 61265-8098 (US)
(72) Erfinder: Noonan, James Thomas, Johnston, Iowa 50131 (US); Thompson, Warren Lynn, Kandiyohi, Minnesota 56251 (US)
(74) Vertreter: Feldmann, Bernhard

(57) **Zusammenfassung**

Bei einem Zinkenaufbau für ein landwirtschaftliches Gerät mit einem Werkzeugträger (10), einem Anschlußkopf (26), einem Zinken (54) und einer lösbaren Haltevorrichtung, wobei der Anschlußkopf (26) mit dem Werkzeugträger (10) verspannbar ist, den Zinken (54) um eine horizontale Achse schwenkbar aufnimmt und derart ausgebildet ist, daß der Zinken (54) im Bereich seiner Schwenkachse seitlich geführt ist, ist der Zinken (54) mit seinem oberen Teil (56) derart im Anschlußkopf (26) gelagert, daß er aus seiner Arbeitsstellung in eine Speicherstellung hochschwenkbar ist, in der sein ein Arbeitswerkzeug (20) aufnehmendes unteres Ende (60) oberhalb der Schwenkachse liegt.

## Beschreibung

Die Erfindung bezieht sich auf einen Zinkenaufbau für ein landwirtschaftliches Gerät mit einem Werkzeugträger, einem Anschlußkopf, einem Zinken und einer lösbaren Haltevorrichtung, wobei der Anschlußkopf mit dem Werkzeugträger verspannbar ist, den Zinken um eine horizontale Achse schwenkbar aufnimmt und derart ausgebildet ist, daß der Zinken im Bereich seiner Schwenkachse seitlich geführt ist.

Derartige Zinkenaufbauten finden vorwiegend bei Maschinen und Geräten für die Bodenbearbeitung oder Pflanzenpflege Verwendung. Die Zinken sind an ihren unteren Enden mit Arbeitswerkzeugen versehen, die den Boden aufreißen, durchmischen, lüften, hacken usw. können, um ihre Grundaufgabe, und zwar eine optimale Bodenbehandlung für die Boden- und Pflanzengesundheit zu erfüllen. Die Arbeitswerkzeuge können auch zur Unkrautentfernung eingesetzt werden. Derartige Geräte werden als Grubber, Hackmaschinen usw. bezeichnet. Die Zinken sind an dem sich in der Regel quer zur Arbeitsrichtung erstreckenden Werkzeugträger, wobei ein Gerät mehrere Werkzeugträger hintereinander oder gestaffelt aufweisen kann, gleichmäßig verteilt, wie zum Beispiel für den herkömmlichen Stoppelumbruch oder für die konservierende Bodenbearbeitung, oder in Gruppen angeordnet, die wiederum gleichmäßig verteilt sind und zwischen Pflanzenreihen zum Einsatz kommen. Je nach den Einsatzverhältnissen sind die Zinken starr oder federnd ausgebildet und in ihrer Neigung verstellbar. In steinigen oder schweren Böden sind Abschersteinsicherungen oder automatische Federsteinsicherungen empfehlenswert. Die Zinken können außerdem mit unterschiedlichen Arbeitswerkzeugen, wie Gänsefußmessern, Flach-, Flügel- oder Meißelscharen, um nur einige zu nennen, ausgestattet sein. Die Arbeitswerkzeuge sollen je nach dem gewünschten Arbeitszweck rasch wechselbar und bei Beschädigungen leicht auswechselbar sein. Insbesondere bei der Gruppenanordnung der Zinken kann es erforderlich sein, daß je nach der Fruchtart zwischen zwei Pflanzenreihen ein, zwei oder mehrere Zinken eingesetzt werden.

Die Arbeitswerkzeuge sind in der Regel mit dem zugehörigen Zinken verschraubt und befinden sich auch bei einem sich nicht in Arbeitsstellung befindlichen gezogenen Gerät dicht über dem Boden. Sie sind daher schwer zugänglich und ein Wechseln oder Auswechseln ist äußerst beschwerlich. Sind die Arbeitswerkzeuge zudem noch dicht gesetzt, so treten beim Einsatz leicht Verstopfungen auf, die beseitigt werden müssen. Bei einem Wechsel der Zinkenanzahl muß der entsprechende Zinken an- oder abgebaut werden, was zumindest zeitaufwendig ist.

Bei dem Zinkenaufbau, von dem die Erfindung ausgeht (US-A-4 177 865), besteht der Anschlußkopf im wesentlichen aus zwei hochkant auf dem Werkzeugträger aufsitzenden Platten, die einen Schwenkbock aufnehmen. Der Schwenkbock wiederum hat zwei L-förmig gestaltete Seitenplatten, die an ihren vorderen Enden über eine Lagerhülse und etwa in ihrer Mitte über eine Tragplatte miteinander in Verbindung stehen. Mit der Tragplatte ist das obere Zinkenende verschraubt, und über einen durch die Lagerhülse steckbaren Bolzen ist der Schwenkbock im Anschlußkopf drehbar gelagert. Über einen gegen die Unterseite der L-förmigen Seitenplatten anliegenden und in ein weiteres Paar von Durchtrittsöffnungen einsteckbaren Stift wird die Schwenkbewegung nach unten des Schwenkbocks begrenzt. Die Schwenkbewegung nach oben wird im Arbeitsstellung durch eine Überlastsicherung bestimmt. Diese besteht aus einer inneren und mit den L-förmigen Seitenplatten schwenkbar verbundenen Hülse, aus einer äußeren und zwischen den Platten des Anschlußkopfes an zwei Stellen lagerbaren Hülse und aus einer Feder, die einenends auf die innere Hülse aufgeschoben und anderenends in die äußere Hülse eingeschoben ist. Sobald die Feder auf Block steht, ist die Schwenkbewegung nach oben begrenzt. Aber auch, wenn die Schwenkverbindung der äußeren Hülse mit dem Anschlußkopf gelöst wird, läßt sich der Schwenkbock nicht nennenswert weiter nach oben verschwenken, da dann die L-förmigen Seitenplatten gegen die Oberseiten der Platten des Anschlußkopfes zur Anlage kommen. Ein derartiger Zinkenaufbau ist aufwendig und teuer. Auch nach Lösen der Schwenkverbindung der Überlastsicherung wird der Zugang zu dem Arbeitswerkzeug nicht verbessert. Ist eine Verringerung der Zinkenzahl erforderlich, so muß der Zinken mit Überlastsicherung entfernt werden.

Andererseits ist bereits für einen Furchenöffner vorgeschlagen worden (US-A-4 700 785), den Werkzeugträger um seine Längsachse zu drehen, damit der Furchenöffner aus seiner unteren Arbeitsstellung in eine Transportstellung verstellt werden kann.

Durch die Erfindung sollen zumindest einige der vorgenannten Nachteile beseitigt werden. Die Erfindung sieht deshalb vor, daß der Zinken mit seinem oberen Teil derart im Anschlußkopf gelagert ist, daß er aus seiner Arbeitsstellung in eine Speicherstellung hochschwenkbar ist, in der sein ein Arbeitswerkzeug aufnehmendes unteres Ende oberhalb der Schwenkachse liegt. Auf diese Weise ist ein aber vorzugsweise jedes Arbeitswerkzeug durch individuelles und einfaches Verschwenken des Zinkens in seine Speicherstellung leicht zugänglich. Es kann daher schnell durch ein anderes ersetzt werden. Wird eine geringere Zinkenanzahl gewünscht, so braucht der Zinken lediglich in seine Speicherstellung verschwenkt zu werden, in der er verbleiben kann. Damit wird auch ein Wiederanbau überflüssig. Eventuell auftretende Verstopfungen können ebenfalls durch ein momentanes Verschwenken in die Speicherstellung beseitigt werden. Der Zinkenaufbau ist einfach, kostengünstig und auch gewichtssparend.

Bei dem Zinkenaufbau nach dem gattungsmäßig berücksichtigten Dokument (US-A-4 177 865) wird in den möglichen Arbeitsstellungen der Schwenkbereich des Zinkens durch den Stift und die Kraft der Feder der Überlastsicherung bestimmt. Bei dem erfindungsgemäßen Zinken ist in den jeweiligen Arbeitsstellungen ein Schwenken vermieden, weil nach einem weiteren Vorschlag der Erfindung die Haltevorrichtung einen Stift, der Zinken wenigstens eine Durchgangsöffnung und der Anschlußkopf mindestens eine erste Durchgangsöffnung aufweist, die in der Arbeitsstellung des Zinkens zur Aufnahme des Stiftes zur Deckung bringbar sind. Damit braucht also in der Arbeitsstellung der Stift lediglich durch die in Deckung gebrachten Durchgangsöffnungen gesteckt zu werden. Der Zinken ist damit in der jeweiligen Arbeitsstellung festgestellt. Da aber der Zinken und/oder der Anschlußkopf mehrere Durchgangsöffnungen aufweisen können, kann zudem noch in einfacher Weise die Winkelstellung des Zinkens verändert werden.

Zusätzlich kann ferner die Haltevorrichtung einen Stift und der Anschlußkopf eine Durchgangsöffnung zur Aufnahme des Stiftes und zur Sicherung des Zinkens in der Speicherstellung aufweisen. Der Stift kann aber auch mit dem Stift identisch sein, mit dem der Zinken in seiner Arbeitsstellung festgestellt wird. Befindet sich dann zum Beispiel der Zinken in seiner Arbeitsstellung, so braucht der Stift lediglich herausgezogen zu werden, wonach der Zinken in seine Speicherstellung hochgeschwenkt wird. Danach wird der Stift in die entsprechende Durchgangsöffnung im Anschlußkopf gesteckt und der Zinken wird in seiner Speicherstellung gehalten. Es ist nicht notwendig, daß der Zinken hierzu eine zusätzliche Durchgangsöffnung aufweist. Es reicht aus, wenn der Zinken in der Speicherstellung auf dem Stift aufliegt.

Der Zinken nach dem gattungsmäßig berücksichtigten Dokument ist C-förmig ausgebildet, im Querschnitt rechteckig ausgebildet und um seine Breitseite gebogen. Der erfindungsgemäße Zinken dagegen ist um 90° gedreht, d. h. der Zinken weist eine vordere Schmalseite auf und ist um diese gebogen. Auf diese Weise ist der Zinken starr und seine vordere Schmalseite behindert auch bei größeren Arbeitstiefen den Erdreichfluß nicht. Damit ist der Kraftaufwand geringer.

Es wird ferner vorgeschlagen, daß der Zinken hochkant in dem Anschlußkopf gelagert ist, wobei der Anschlußkopf rückwärtige Seitenwände aufweist, die den oberen Teil des Zinkens seitlich umfassen. Die Hochkantanordnung erlaubt in einfachster Weise, daß eine oder mehrere Durchgangsöffnungen sowie eine Bohrung für die Schwenklagerung im Zinken vorgesehen werden können. Die den Zinken seitlich umfassenden Seitenwände ermöglichen eine wirkungsvolle und sichere Seitenführung des Zinkens, wobei dann mindestens eine erste Durchgangsöffnung für die Aufnahme des Stiftes in dem den Zinken seitlich umfassenden Teil der Seitenwände des Anschlußkopfes vorgesehen sein kann.

Desweiteren wird vorgeschlagen, daß der Zinken an seinem seiner Schwenkachse abgelegenen Ende mit einem Langloch zur lösbaren Befestigung des Arbeitswerkzeuges versehen ist. In der Regel ist das Arbeitswerkzeug an zwei Stellen mit dem Zinken verschraubt. Ist eine dieser Stellen als Langloch ausgebildet, so ermöglicht dies eine zusätzliche Winkeleinstellung des Arbeitswerkzeuges mit Bezug auf den Zinken. Ist zudem das Langloch an seinem rückwärtigen Ende offen, dann kann das Arbeitswerkzeug bei einem Auftreffen auf ein steiniges Hindernis nach rückwärts ausbrechen.

Zweckmäßig kann der Zinken im Bereich seiner Schwenkachse verbreitert ausgebildet sein, wobei die Seitenwände zur Lagerung des Zinkens einen dem erweiterten Bereich entsprechenden Abstand aufweisen, der sich in rückwärtiger Richtung auf die Stegbreite des Zinkens verringert. Für eine optimale Seitenführung des Zinkens kann ferner noch vorgesehen werden, daß der Zinken in seinem oberen Bereich rückwärtig der Schwenkachse durch die Seitenwände des Anschlußkopfes auf einer Länge seitlich geführt ist, die wenigstens 25% der Gesamtlänge des Zinkens in der Projektion und bei sich in Arbeitsstellung befindlichen Zinken beträgt.

Der Anschlußkopf kann ein Gußstück sein. Weisen die Seitenwände des Anschlußkopfes an ihren rückwärtigen unteren Ende noch einen Anschlagteil auf, so fällt beim Herausziehen des Stiftes der Zinken auf bzw. gegen diesen Anschlagteil und braucht nur ein kurzes Stück angehoben zu werden, um in seiner neuen Arbeitsstellung oder in der Speicherstellung wieder festgelegt zu werden.

In der Zeichnung sind zwei nachfolgend näher erläuterte Ausführungsbeispiele der Erfindung dargestellt. Es zeigt:
- Fig. 1: ein erstes Ausführungsbeispiel eines Zinkenaufbaus mit verbreiterter Schwenklagerung in Seitenansicht,
- Fig. 2: den Zinkenaufbau nach Fig. 1 in einer Ansicht von rückwärts,
- Fig. 3: das zweite Ausführungsbeispiel, bei dem der Anschlußkopf ein unverbreitertes Profil aufweist,
- Fig. 4: den Zinkenaufbau nach Fig. 3 in einer Ansicht von rückwärts, allerdings ohne Arbeitswerkzeug und
- Fig. 5: das zur Aufnahme eines Arbeitswerkzeuges bestimmte untere Ende des Zinkens nach den Fig. 3 und 4.

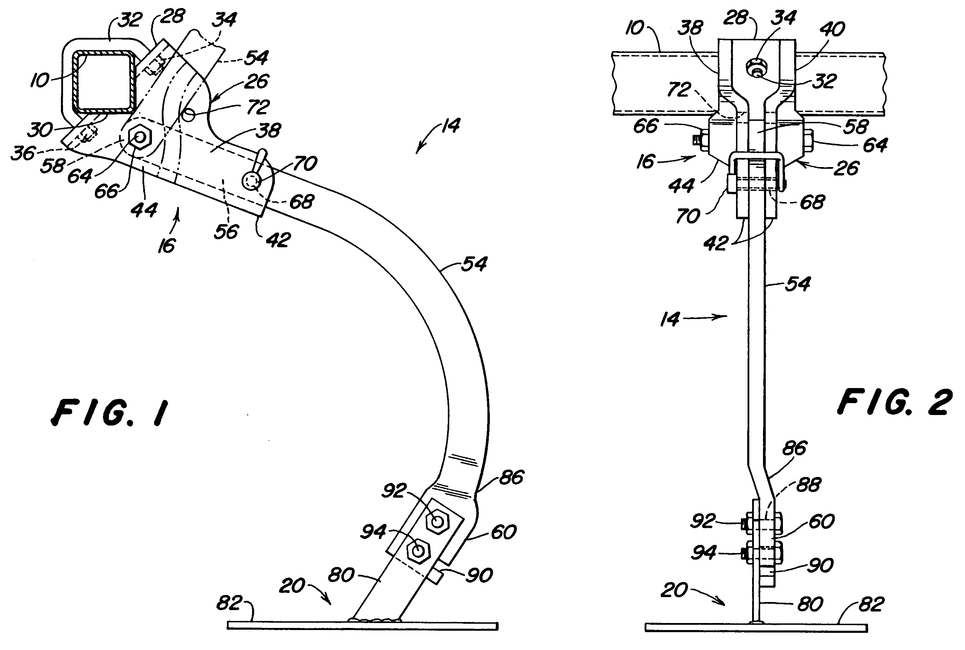

In Fig. 1 der Zeichnung ist der Werkzeugträger 10 eines Grubbers bzw. der eines Gerätes für die Pflanzenpflege oder für die Bodenbearbeitung dargestellt. Der Werkzeugträger 10 ist im Schnitt dargestellt, erstreckt sich quer zur Arbeitsrichtung und besteht im wesentlichen aus einem Vierkantrohr. Das nicht weiter dargestellte Gerät kann an einem Ackerschlepper angebaut sein oder sich auf eigenen Rädern auf dem Boden abstützen. Bei dem bevorzugten Ausführungsbeispiel bearbeiten die an den Werkzeugträger 10 anschließbaren Arbeitswerkzeuge jeweils den Bereich zwischen zwei benachbarten Pflanzenreihen, wobei der Werkzeugträger selbst eine beträchtliche Breite aufweisen kann. Ein im wesentlichen C-förmiger Zinkenaufbau ist in Fig. 1 mit 14 bezeichnet, über eine Klemmvorrichtung 16 an den Werkzeugträger 10 anschließbar und mit einem Arbeitswerkzeug 20 für die Bodenbearbeitung versehen. Mit einem oder mehreren Arbeitswerkzeugen 20 wird der Boden zwischen zwei Pflanzenreihen aufgelockert, gehackt, gegrubbert, gehäufelt oder beispielsweise nur belüftet. Die Anzahl der nebeneinander oder gestaffelt zwischen jeweils zwei Pflanzenreihen zum Einsatz kommenden Arbeitswerkzeuge hängt von dem Arbeitseinsatz und der Pflanzenart ab. In der Regel kann man davon ausgehen, daß jeweils ein bis drei Arbeitswerkzeuge 20 den zwischen zwei nebeneinanderliegenden Pflanzenreihen verbleibenden Bodenbereich bearbeiten. Jedes Arbeitswerkzeug ist dann mit einem eigenen bzw. zugehörigen Zinkenaufbau an den Werkzeugträger angeschlossen.

Aus den Fig. 1 und 2 erkennt man, daß jeder Zinkenaufbau 14 einen Anschlußkopf 26 oder Anschlußteil mit einer schräg liegenden oberen Klemmwand 28 aufweist. Die Klemmwand 28 hat eine V-förmige Ausnehmung 30, die im angebauten Zustand die unten liegende rückwärtige Kante des Werkzeugträgers 10 umgreift und gegen diese anliegt. Die Befestigung erfolgt über eine etwa U-förmige Bügelschraube 32, die die Vorder- und Oberseite des Werkzeugträgers 10 übergreift und die sich mit ihren freien Enden durch entsprechende Öffnungen in der Klemmwand 28 erstreckt. Die Sicherung erfolgt durch Muttern 34 und 36, die auf die freien und sich durch die Klemmwand erstreckenden Enden der Bügelschraube 32 aufschraubbar sind. Im verspannten Zustand liegen dann die Muttern gegen die Unterseite der Klemmwand 28 an und sichern den Anschlußkopf 26 an dem Werkzeugträger 10 zuverlässig. Die Klemmwand 28 ist in der Draufsicht rechteckig oder etwa rechteckig ausgebildet, wobei die längeren Kanten mit Bezug auf Fig. 1 schräg und die Schmalseiten parallel zu den Kanten des Werkzeugträgers verlaufen. Auf diese Weise ist ausreichend viel aber auch leicht zugänglicher Platz für die Muttern 34 und 36 und auch Raum für weitere Anschlußköpfe 26 vorhanden. Von der Rückseite der Klemmwand 28 erstrecken sich Seitenwände 38 und 40 mit einer besonderen Formgebung nach rückwärts. Die Formgebung ist derart, daß die beiden Seitenwände 38 und 40 zunächst im Bereich der Muttern 34 und 36 etwa an den Außenkanten der Klemmwand 28 vorgesehen sind, damit hier ausreichend Platz für den Einsatz eines Werkzeugschlüssels verbleibt, dann aber aufeinander zu laufen und zumindest in ihrem rückwärtigen unteren Bereich 42 nur noch einen Spalt zwischen sich offen lassen, der zur Aufnahme und gegebenenfalls zur Seitenführung eines Zinkens 54 dient. Ein aufgeweiterter Abschnitt 44, der zur drehbaren Lagerung des Zinkens 54 dient, ist unterhalb der rückwärtigen unteren Kante des Werkzeugträgers 10 erkennbar.

Der Zinkenaufbau 14 weist ferner den Zinken 54 auf, der im wesentlichen C-förmig gestaltet ist, um seine schmale Hochkante gebogen ist und einen oberen Teil 56 mit einem vergrößerten Schwenkabschnitt 58 aufweist, der mit dem aufgeweiteten Abschnitt 44 des Anschlußkopfes 26 schwenkbar verbindbar ist. Im einzelnen erstreckt sich der Zinken 54 zunächst von seinem Schwenkabschnitt 58 auf einem geraden Abschnitt schräg nach rückwärts und bodenwärts, geht dann in einen nach vorne gekrümmten Abschnitt über und endet in einem unteren Ende 60, das der Werkzeugaufnahme dient. Zur schwenkbaren Befestigung des oberen Teils des Zinkens 54 ist ein Gewindezapfen 64 vorgesehen, der sich durch Öffnungen in den Seitenwänden 38 und 40 und durch eine Öffnung in dem Schwenkabschnitt 58 erstreckt und auf den endseitig eine Mutter 66 aufschraubbar ist. Auf diese Weise kann der Zinken 54 um die Achse des Gewindezapfens 64 zwischen einer Arbeitsstellung, die in Fig. 1 in ausgezogenen Linien dargestellt ist, und einer Speicherstellung verstellt werden, die in Fig. 1 in gestrichelten Linien angedeutet ist. Zumindest in der Arbeitsstellung wird der sich an den Schwenkabschnitt 58 anschließende gerade Abschnitt des Zinkens 54 zwischen den Seitenwänden 38 und 40 in dem Bereich 42 des Anschlußkopfes 26 seitlich geführt, wodurch eine Seitenstabilität gewährleistet ist. In der hochgeschwenkten Speicherstellung kann eine entsprechende Seitenführung zweckmäßig sein. Die Länge der Seitenführung des Zinkens 54 in seiner Arbeitsstellung ist beträchtlich im Vergleich zur Gesamtlänge des Zinkens und beträgt wenigstens 25% der Gesamtlänge in der Projektion.

Das rückwärtige Ende der Seitenwände 38 und 40 im Bereich 42 ist mit je einer Öffnung 68 versehen, die in der Arbeitsstellung zu einer Öffnung im Zinken 54 ausgerichtet sind, so daß der Zinken 54 durch einen durch diese Öffnungen steckbaren Stift 70 odgl. in seiner Arbeitsstellung gesichert ist bzw. gehalten wird. Nach einem Herausnehmen des Stiftes 70 kann der Zinken in seine hochgeschwenkte Speicherstellung verschwenkt werden. Auch hier kann der Zinken 54 arretiert bzw. gehalten werden, da oberhalb und rückwärtig des Gewindezapfens 64 in den Seitenwänden des Anschlußkopfes 26 jeweils eine weitere Öffnung 72 vorgesehen ist, die den Stift 70 aufnehmen können, so daß der Zinken 54 in seiner Speicherstellung auf dem Stift 70 aufliegen kann. Damit ist verhindert, daß der Zinken aus seiner Speicherstellung in seine Arbeitsstellung zurückfallen kann. In der Speicherstellung befindet sich das untere Ende 60 des Zinkens beträchtlich oberhalb des erweiterten Abschnittes 44 des Anschlußkopfes 26, und das sich dort befindliche Arbeitswerkzeug 20 ist leicht zugänglich.

Das in den Fig. 1 und 2 gezeigte Arbeitswerkzeug 20 kann ein relativ flaches Breitschar sein, wie es für die Bodenlüftung und die Unkrauttilgung Verwendung findet. Andere Werkzeugformen, wie Gänsefußmesser usw., sind natürlich ebenfalls einsetzbar. Jedenfalls ist das Arbeitswerkzeug 20 leicht auswechselbar. Von dem eigentlichen Arbeitswerkzeug in Form eines im wesentlich flachen V-förmigen Abschnitts 82 steht ein Stiel oder ein mit Befestigungslöchern versehenes Anschlußstück 80 nach oben und rückwärts vor, und aus Fig. 2 ist zu ersehen, daß der Zinken 54 im Bereich seines unteren Endes 60 seitlich an einer Stelle 86 abgesetzt ist. Das untere Zinkenende 60 ist mit einer Öffnung 88 und einem zur rückwärtigen Seite hin offenen Schlitz 90 versehen, die zu entsprechenden Öffnungen in dem Arbeitswerkzeug 20 im montierten Zustand ausgerichtet sind. Die lösbare Befestigung erfolgt durch Schrauben und Muttern 92 und 94. Der nach hinten offene und am unteren Ende vorgesehene Schlitz 90 dient zur Neigungseinstellung des Werkzeuges und als Überlastsicherung für den Fall, daß das Arbeitswerkzeug im Einsatz auf ein Hindernis stößt. Das Arbeitswerkzeug kann in der Speicherstellung leicht entfernt werden, indem man lediglich die obere Schraube 92 entfernt und die untere Schraube 94 lockert.

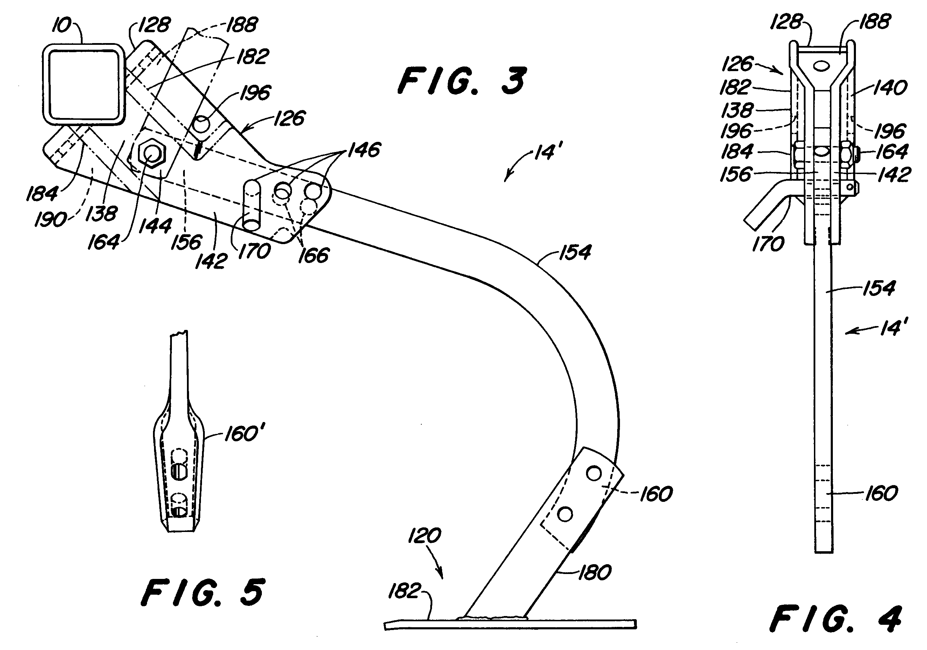

Bei dem Zinkenaufbau 14' nach dem Ausführungsbeispiel in den Fig. 3 und 4 ist ein Anschlußkopf 126 ebenfalls mit einer im Einsatz schräg liegenden Klemmwand 128 versehen, die mit dem Werkzeugträger 10 über eine nicht dargestellte Bügelschraube mit zugehörigen Muttern verspannt wird, und zwar in einer ähnlichen Art und Weise, wie sie für den Anschlußkopf 26 nach dem Ausführungsbeispiel in den Fig. 1 und 2 erläutert wurde. Von der Klemmwand 126 aus erstrecken sich Seitenwände 138 und 140 nach rückwärts bis zu einem den Zinken 154 umfassenden Bereich 142, der nach rückwärts und nach unten verlängert und relativ schmal ausgebildet ist. Der Bereich 142 ist in seinem vorderen Abschnitt rückwärtig und unterhalb der hinten liegenden unteren Kante des Werkzeugträgers mit einem Öffnungen aufweisenden Schwenkabschnitt 144 zum schwenkbaren Anschluß des Zinkens 154 versehen. Gleichfalls weist der Bereich 142 noch einen Satz rückwärtiger Öffnungen 146 für die Zinkeneinstellung auf, was nachfolgend noch näher erläutert wird.

Auch bei dem Zinkenaufbau 14' ist der Zinken 154 C-förmig gebogen und mit einem oberen Teil 156 versehen, der seitlich durch die Seitenwände 138 und 148 im Bereich 142 geführt bzw. von diesen umgeben ist. Das vordere Ende des oberen Zinkenteils 156 ist aufgebohrt, so daß es über einen Gewindezapfen 164 in dem Schwenkabschnitt 144 zwischen einer in Fig. 3 in ausgezogenen Linien dargestellten Arbeitsstellung und einer in gestrichelten Linien angedeuteten Speicherstellung angeschlossen werden kann. Der aus dem Bereich 144 austretende Abschnitt des Zinkens 154 geht, wie Fig. 3 zeigt, in einen nach vorne und unten gebogenen Abschnitt über und endet schließlich in seinem nach vorne zeigenden Ende 160 für die Arbeitswerkzeugaufnahme. Öffnungen 166 in dem oberen Teil 156 des Zinkens 154 haben mit Bezug auf die Schwenkachse des Zinkens 154 unterschiedliche Radien und können mit einem der Sätze von Öffnungen 146 in Deckung gebracht werden. Das in Deckungbringen erfolgt bei unterschiedlichen Winkel- oder Schrägstellungen des Zinkens 154. In den jeweiligen Winkelstellungen kann der Zinken durch einen durch die Öffnungen 146, 166 steckbaren Stift 170 in der gewünschten Arbeitsstellung gesichert werden.

Der Anschlußkopf 126 divergiert nach außen in Vorwärtsrichtung an oberen und unteren Stellen 182 und 184, so daß an der Klemmwand 128 eine relativ große Kontaktfläche für den festen und sicheren Anschluß an den Werkzeugträger 10 entsteht. Durch das Divergieren wird auch an Stellen 188 und 190 ein Freiraum geschaffen, der den Werkzeugzugang zu den Muttern auf der nicht gezeigten Bügelschraube erleichtert. Vorzugsweise besteht der Anschlußkopf 126 aus einem einstückigen Gußstück mit einem sich quer erstreckenden Anschlagteil 174, der den Anschlußkopf 126 versteift und die bodenwärts gerichtete Schwenkbewegung des Zinkens 154 über die unterste feststellbare Einstellstellung des Zinkens hinaus begrenzt.

Die Seitenwände 138 und 140 sind ferner noch mit Öffnungen 196 versehen, in die der Stift 170 einsteckbar ist, um den Zinken 154 in seiner hoch geschwenkten Speicherstellung halten zu können, in der Materialansammlungen entfernt, Arbeitswerkzeuge ausgewechselt, ersetzt oder repariert werden können oder in der ein oder mehrere Arbeitswerkzeuge nur gesichert werden, damit weniger Arbeitswerkzeuge zwischen den Pflanzenreihen zum Einsatz kommen. Außerdem befindet sich das Zinkenende 160 in seiner Speicherstellung auf einer Höhe, die oberhalb des Werkzeugträgers 10 liegt, so daß das oder die Arbeitswerkzeuge leicht zugänglich sind. Selbstverständlich können alle Formen von Arbeitswerkzeugen entsprechend den Pflanzen- oder Bodenbedingungen zum Einsatz kommen.

Für die Winkeleinstellungen der Zinken 154 mit Bezug auf den Anschlußkopf 126 muß der Stift 170 entfernt und der Zinken 154 solange verschwenkt werden, bis in der gewünschten Schrägstellung die Öffnungen 146 und 166 deckungsgleich sind. Der Stift wird dann wieder eingesetzt und der Zinken 154 ist in seiner neuen Stellung gesichert. Der Anschlagteil 174 bewirkt, daß der Zinken 154 nur um ein kurzes Stück von Hand nach oben verschwenkt werden muß, bis die neue Winkelstellung erreicht ist.

Auch das Arbeitswerkzeug 120 läßt sich in seiner Winkelstellung mit Bezug auf den Zinken 154 noch verändern. Hierzu ist in dem Zinkenende 160 oberhalb einer Befestigungsbohrung ein Langloch 200 vorgesehen, so daß das Arbeitswerkzeug eine Vielzahl von und nur durch die Länge des Langloches begrenzte Stellungen einnehmen kann. Hinzu kommen noch die Verstellmöglichkeiten des Zinkens 154 im Anschlußkopf 126, so daß das Arbeitswerkzeug 120 in der Regel optimal einstellbar ist, um die gewünschte Lockerung des Bodens oder das Aufbrechen seiner Oberschicht oder die Vernichtung von Unkräutern oder das Vermischen mit Dünger bei optimalem Fluß des Erdreichs zu erzielen.

## Patentansprüche

1. Zinkenaufbau für ein landwirtschaftliches Gerät mit einem Werkzeugträger (10), einem Anschlußkopf (26, 126), einem Zinken (54, 154) und einer lösbaren Haltevorrichtung, wobei der Anschlußkopf (26, 126) mit dem Werkzeugträger (10) verspannbar ist, den Zinken (54, 154) um eine horizontale Achse schwenkbar aufnimmt und derart ausgebildet ist, daß der Zinken (54, 154) im Bereich seiner Schwenkachse seitlich geführt ist, dadurch gekennzeichnet, daß der Zinken (54, 154) mit seinem oberen Teil (56, 156) derart im Anschlußkopf (26, 126) gelagert ist, daß er aus seiner Arbeitsstellung in eine Speicherstellung hochschwenkbar ist, in der sein ein Arbeitswerkzeug (20, 120) aufnehmendes unteres Ende (60, 160) oberhalb der Schwenkachse liegt.

2. Zinkenaufbau nach Anspruch 1, dadurch gekennzeichnet, daß die Haltevorrichtung einen Stift (70, 170), der Zinken (54, 154) wenigstens eine Duchgangsöffnung und der Anschlußkopf (26, 126) mindestens eine erste Durchgangsöffnung aufweist, die in der Arbeitsstellung des Zinkens (54, 154) zur Aufnahme des Stiftes (70, 170) zur Deckung bringbar sind.

3. Zinkenaufbau nach Anspruch 1, dadurch gekennzeichnet, daß die Haltevorrichtung einen Stift (70, 170) und der Anschlußkopf (26, 126) eine Durchgangsöffnung (72) zur Aufnahme des Stiftes (70, 170) und zur Sicherung des Zinkens (54, 154) in der Speicherstellung aufweist.

4. Zinkenaufbau nach Anspruch 1, dadurch gekennzeichnet, daß der Zinken (54, 154) eine vordere Schmalseite aufweist und um diese gebogen ist.

5. Zinkenaufbau nach einem oder mehreren der vorherigen Ansprüche, dadurch gekennzeichnet, daß der Zinken (54, 154) hochkant in dem Anschlußkopf (26, 126) gelagert ist, wobei der Anschlußkopf (26, 126) rückwärtige Seitenwände (38, 40, 138, 140) aufweist, die den oberen Teil (56, 156) des Zinkens (54, 154) seitlich umfassen.

6. Zinkenaufbau nach den Ansprüchen 2 und 5, dadurch gekennzeichnet, daß mindestens eine erste Durchgangsöffnung für die Aufnahme des Stiftes (70, 170) in dem den Zinken (54, 154) seitlich umfassenden Teil der Seitenwände (38, 40, 138, 140) des Anschlußkopfes (26, 126) vorgesehen ist.

7. Zinkenaufbau nach einem oder mehreren der vorherigen Ansprüche, dadurch gekennzeichnet, daß der Zinken (54, 154) an seinem seiner Schwenkachse abgelegenen Ende (60, 160) mit einem Langloch (90, 200) zur lösbaren Befestigung des Arbeitswerkzeuges (20, 120) versehen ist.

8. Zinkenaufbau nach Anspruch 7, dadurch gekennzeichnet, daß das Langloch (90) an seinem rückwärtigen Ende offen ist.

9. Zinkenaufbau nach einem oder mehreren der vorherigen Ansprüche, dadurch gekennzeichnet, daß der Zinken (54, 154) im Bereich seiner Schwenkachse verbreitert ausgebildet ist und daß die Seitenwände (38, 40, 138, 140) zur Lagerung des Zinkens (54, 154) einen dem erweiterten Bereich (42) entsprechenden Abstand aufweisen, der sich in rückwärtiger Richtung auf die Stegbreite des Zinkens (54, 154) verringert.

10. Zinkenaufbau nach einem oder mehreren der vorherigen Ansprüche, dadurch gekennzeichnet, daß der Zinken (54, 154) in seinem oberen Bereich rückwärtig der Schwenkachse durch die Seitenwände (38, 40, 138, 140) des Anschlußkopfes (26, 126) auf einer Länge seitlich geführt ist, die wenigstens 25% der Gesamtlänge des Zinkens (54, 154) in der Projektion und bei sich in Arbeitsstellung befindlichen Zinken beträgt.

11. Zinkenaufbau nach einem oder mehreren der vorherigen Ansprüche, dadurch gekennzeichnet, daß der Anschlußkopf (26, 126) einstückig gegossen ist und daß die Seitenwände (38, 40, 138, 140) an ihren rückwärtigen unteren Enden einen Anschlagteil (174) aufweisen.
